# EUROPEAN PATENT SPECIFICATION

(11) **EP 3 594 032 B1**
(45) Date of publication and mention of the grant of the patent: **14.04.2021**
(21) Application number: 19185907.3
(22) Date of filing: 12.07.2019
(51) Int. Cl.: B60H 1/00, B60H 1/24, B60H 1/22

(54) **AIR-TO-WATER HEAT PUMP WITH WATER BYPASS DURING THE DEFROST CYCLE**
LUFT-WASSER-WÄRMEPUMPE MIT WASSERUMLEITUNG WÄHREND DES ABTAUZYKLUS
POMPE À CHALEUR AIR-EAU COMPORTANT UNE DÉRIVATION D'EAU DURANT LE CYCLE DE DÉGIVRAGE

(30) Priority: 13.07.2018 IT 201800007165
(43) Date of publication of application: 15.01.2020
(73) Proprietor: DENSO THERMAL SYSTEMS S.p.A., 10046 Poirino (Torino) (IT)
(72) Inventor: CAGLIERO, Stefano, 10046 Poirino (Torino) (IT)
(74) Representative: Vanzini, Christian

(56) References cited:
- EP-A2- 0 816 143
- WO-A1-2017/022512
- DE-A1-102007 039 195

## Description

The present invention generally refers to heat pump systems for vehicles.

A heat pump is a device that transfers thermal energy from a heat source to a so-called "heat sink". Heat pumps transfer thermal energy in the opposite direction with respect to spontaneous heat transfer, absorbing heat from a cold space and releasing it to a warmer one.

A heat pump uses a small amount of external work to enable it to carry out the transfer of energy from the heat source to the heat sink. When a heat pump is used for heating, it uses the same cooling cycle as an air conditioner or refrigerator, but in the opposite direction - releasing heat into the conditioned space rather than the surrounding environment. In this use, heat pumps extract heat from the external ambient air.

During the operation of a heat pump, the temperature of the external exchanger acting as an evaporator drops below 0°C and the water contained in the air (humidity) condenses and crystallizes on the surface of the external exchanger. On the evaporator, the frost plays the role of thermal insulator, thus reducing the heat transfer. The process of removing this ice, called the defrosting cycle, causes the production of heat to stop. When the heat pump is installed on the roof of a bus and the heat is transferred inside the bus through a water circuit, the defrosting cycle (usually about 10 minutes per hour of work) may cause a feeling of discomfort for the passengers

A similar heat pump is disclosed in WO 2017/022512.

One object of the present invention is to make available a heat pump for vehicles capable of overcoming at least in part the aforementioned drawbacks.

An air-water heat pump for a vehicle is therefore the object of the invention, comprising a refrigerant fluid circuit for the circulation of a refrigerant fluid and a water circuit for the circulation of water for the air conditioning inside the vehicle,
wherein the refrigerant fluid circuit comprises an external heat exchanger for the heat exchange between the refrigerant fluid and the external ambient air, and an internal heat exchanger for the heat exchange between the refrigerant fluid and the water of the water circuit,
a refrigerant fluid temperature sensor configured to measure a temperature of the refrigerant fluid coming out of the external heat exchanger,
a control unit configured to switch in a programmed way the heat pump from a heating phase for heating an internal environment of the vehicle to a defrost phase for defrosting the external heat exchanger when the measured temperature of the refrigerant fluid is below a predetermined threshold, indicative of the presence of ice on the external heat exchanger,
wherein the water circuit comprises a bypass line interconnecting a water inlet and a water outlet of the internal heat exchanger, and valve means controllable by the control unit to switch the water circuit, when the heat pump is switched from the heating phase to the defrost phase, from a normal configuration wherein a water path of the internal heat exchanger is open and the bypass line is closed, to a bypass configuration wherein the water path of the internal heat exchanger is closed and the bypass line is open.

With the present invention, it is thus possible to decouple the refrigerant fluid circuit of the heat pump from the water circuit and use the thermal energy stored by the water for heating the passenger compartment. It is thus no longer necessary to interrupt the circulation of water inside the passenger compartment, and there will be only a reduction in the heating power.

Further features and advantages of the system according to the invention will become more apparent in the following detailed description of an embodiment of the invention, made with reference to the accompanying drawings, provided purely to be illustrative and non-limiting, wherein:
- Figure 1 shows a diagram of a heat pump for buses according to the invention;
- Figure 2 shows the heat pump in Figure 1 in a heating phase;
- Figure 3 shows the heat pump in Figure 1 in a cooling phase; and
- Figure 4 shows the heat pump in Figure 1 in a defrosting phase.

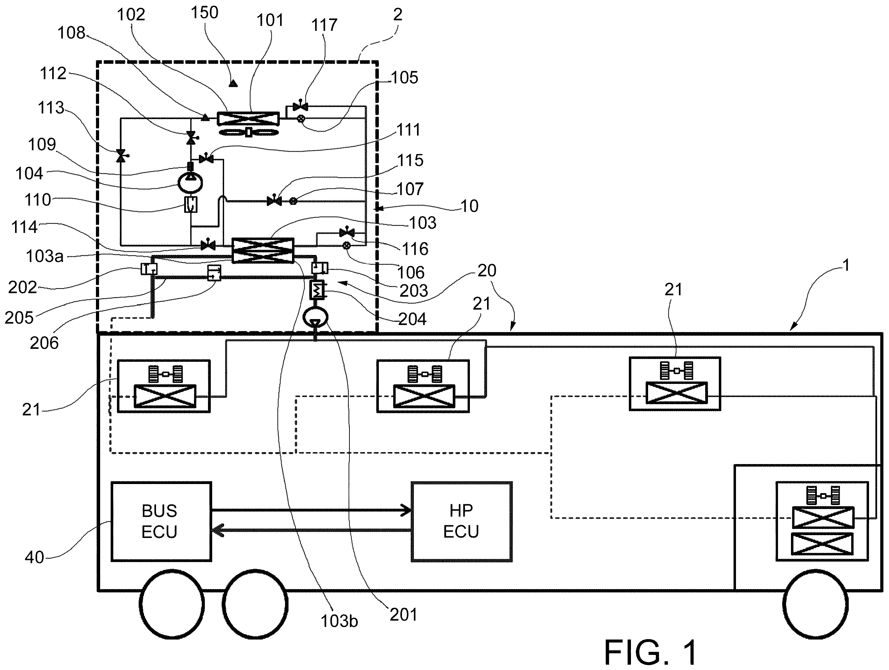

With reference to figure 1, a vehicle 1, for example a bus, is schematically represented. Figure 1 also shows an air-water heat pump system of the vehicle. The heat pump comprises a refrigerant fluid circuit 10 for the circulation of a refrigerant fluid and a water circuit 20 for the circulation of water for the air conditioning within the vehicle. The refrigerant fluid circuit 10 is generally located outside the passenger compartment of the vehicle and may be housed within the roof of the vehicle, represented by the dashed line in bold 2 in figure 1. The water circuit 20 is partly located within the roof of the vehicle, and partly extends into the passenger compartment and into the driver's cabin. Inside the passenger compartment, the water circuit 20 comprises a plurality of air-conditioning users 21. Each air-conditioning user 21 comprises a blower and a water/air heat exchanger (radiant mass) for the heat exchange between the water of the water circuit 20 and the air inside the vehicle.

A heat pump control unit 30 is provided to control the operation of the heat pump by communicating with a vehicle control unit 40. For example, a control signal relative to a requested temperature, a control signal relative to a defrost request, a temperature signal indicative of the internal temperature of the vehicle, and so on, may be supplied to the control unit 30 of the heat pump via the vehicle's control unit 40. In turn, the control unit 30 of the heat pump may provide the control unit 40 of the vehicle with feedback signals that may be used to diagnose the system.

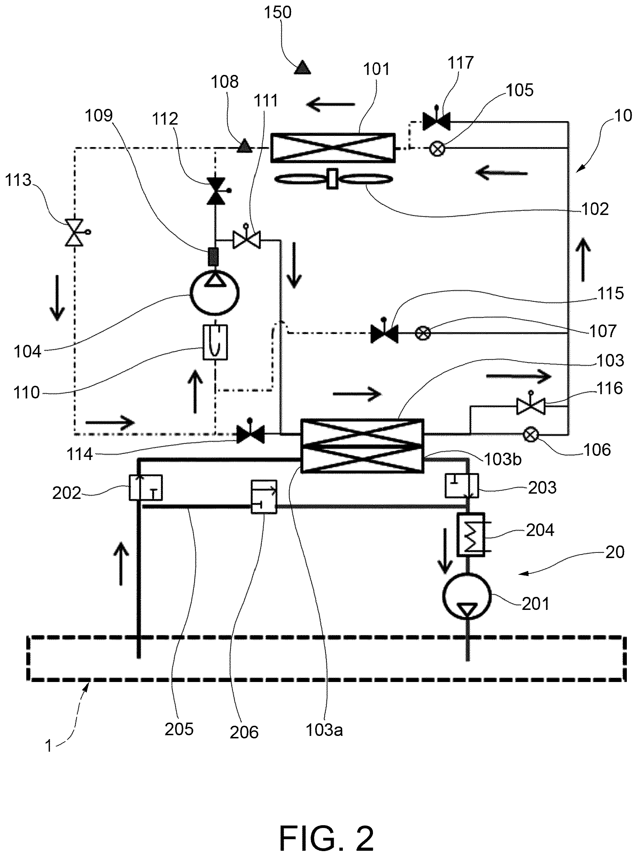

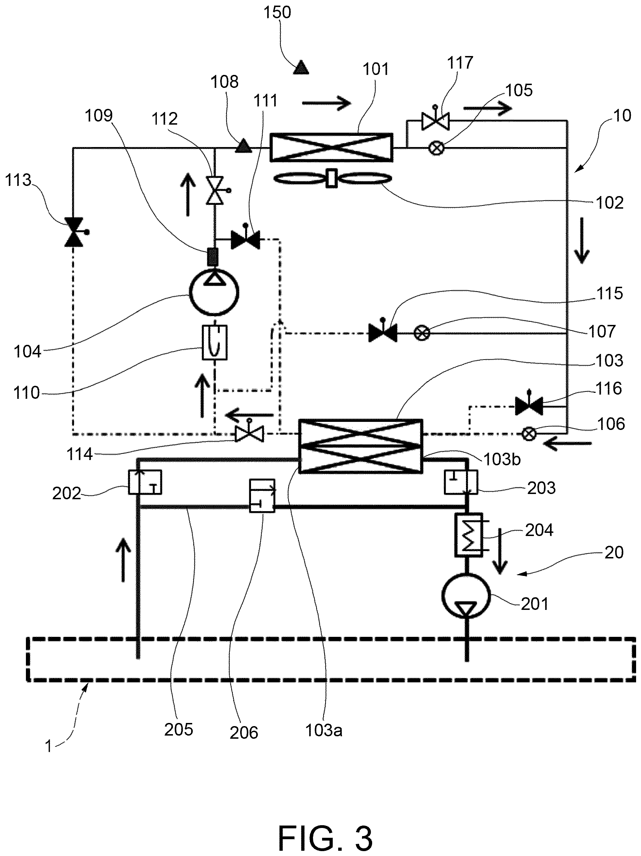

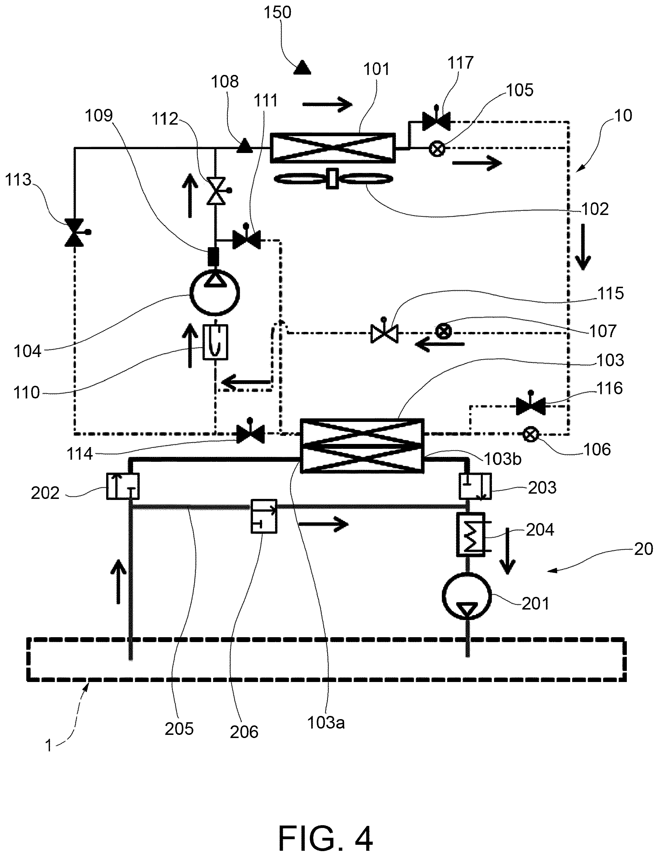

The refrigerant fluid circuit 10 comprises an external heat exchanger 101 for the heat exchange between the refrigerant fluid and the external ambient air, which is thus associated with a blower 102. The refrigerant circuit 10 further comprises an internal heat exchanger 103 for the heat exchange between the refrigerant fluid and the water of the water circuit 20. For the circulation of the refrigerant fluid in the refrigerant fluid circuit 10, a compressor 104 is provided, while a first, a second and a third orifice respectively 105, 106, 107 with expansion valve function, respectively associated with the heating phase (Figure 2), the cooling phase (Figure 3) and the defrosting phase (Figure 4) are provided.

A temperature sensor 108 is associated with the external heat exchanger 101 to measure the temperature of the refrigerant fluid leaving or entering the external heat exchanger 101.

A pressure sensor 109 is provided downstream of the compressor 104 to measure the pressure of the refrigerant fluid coming out of the compressor 104. Moreover, an accumulator 110 is located upstream of the compressor 104.

In order to switch the refrigerant fluid circuit 10 between the three different operating phases, valve means are provided, which, in the example shown, consist of a series of two-way valves. For example, a first two-way valve 111 is arranged between the compressor outlet 104 and the internal heat exchanger 103, a second two-way valve 112 is arranged between the compressor outlet 104 and the external heat exchanger 101, a third two-way valve 113 is arranged between the external heat exchanger 101 and a compressor inlet 104, a fourth two-way valve 114 is arranged between the internal heat exchanger 103 and the compressor inlet 104, a fifth two-way valve 115 is arranged between the third orifice 107 and the compressor inlet 104, a sixth two-way valve 116 is arranged in parallel with the second orifice 106, and a seventh two-way valve 117 is arranged in parallel with the first orifice 105.

The system further comprises an external air temperature sensor 150 configured to measure the temperature of the external ambient air.

To circulate water between the internal heat exchanger 103 and the users 21, the water circuit 20 comprises a pump 201. A two-way inlet valve 202 and a two-way outlet valve 203 are arranged respectively at an inlet 103a and an outlet 103b of a water path of an internal heat exchanger 103. An additional electric heater 204 is provided downstream of the water outlet 103b of the internal heat exchanger 103.

The water circuit 20 further comprises a bypass line 205 that interconnects the water inlet 103a and the water outlet 103b of the internal heat exchanger 103 and is arranged in parallel with the water path inside the internal heat exchanger 103. A two-way bypass valve 206 is arranged on the bypass line. As will be explained hereinafter, the two-way valves 202, 203 and 206 of the water circuit 20 are controllable in a coordinated manner to switch the water circuit 20 from a normal configuration, wherein the water path of the internal heat exchanger 103 is open and the bypass line 205 is closed, to a bypass configuration, wherein the water path of the internal heat exchanger 103 is closed and the bypass line 205 is open. Naturally, alternative configurations of the valve means of the water circuit are possible, which could work in the manner indicated above.

Figure 2 shows the heat pump of Figure 1 in the heating phase. The arrows shown in the figure show the path of the refrigerant fluid in the refrigerant fluid circuit 10 and the path of the water in the water circuit. The low-pressure part of the refrigerant fluid circuit 10 is represented with dashed and dotted lines; the high-pressure part of the refrigerant fluid circuit is represented with continuous lines.

In the heating phase shown in figure 2, the second two-way valve 112, the fourth two-way valve 114, the fifth two-way valve 115 and the seventh two-way valve 117 of the refrigerant circuit 10 are closed. In Figure 2 and in the following figures, the closed valves are shown in black, whereas the open valves are shown in white. Starting with the compressor 104, the refrigerant fluid passes to the first two-way valve 111, to the internal heat exchanger 103, which acts as a condenser, to the sixth two-way valve 116, to the first orifice 105, to the external heat exchanger 101, which acts as an evaporator, and to the third two-way valve 113, finally returning to the compressor 104.

In the water circuit 20, the two-way inlet valve 202 and the two-way outlet valve 203 are open, whereas the two-way bypass valve 206 of the bypass line 205 is closed.

In the external heat exchanger 101, the external ambient air transfers heat to the refrigerant fluid. In the internal heat exchanger 103, the refrigerant fluid transfers heat to the water in the water circuit 10. The heated water is transported to the various users 21, through which it transfers heat to the air in the passenger compartment of the vehicle 1. From the users 21, the water returns to the water inlet 103b of the internal heat exchanger 103.

Figure 3 shows the heat pump in Figure 1 in the cooling phase. The arrows shown in the figure show the path of the refrigerant fluid in the refrigerant fluid circuit 10 and the path of the water in the water circuit. The low-pressure part of the refrigerant fluid circuit 10 is represented with dashed and dotted lines; the high-pressure part of the refrigerant fluid circuit is represented with continuous lines.

In the cooling phase illustrated in figure 2, the first two-way valve 111, the third two-way valve 113, the fifth two-way valve 115 and the sixth two-way valve 116 of the refrigerant circuit 10 are closed. Starting with the compressor 104, the refrigerant fluid passes to the second two-way valve 112, to the external heat exchanger 101, which acts as a condenser, to the sixth two-way valve 116, to the second orifice 106, to the internal heat exchanger 103, which acts as an evaporator, and to the fourth two-way valve 114, finally returning to the compressor 104.

In the water circuit 20, the two-way inlet valve 202 and the two-way outlet valve 203 are open, whereas the two-way bypass valve 206 of the bypass line 205 is closed.

In the external heat exchanger 101, the refrigerant fluid transfers heat to the external ambient air. In the internal heat exchanger 103, the refrigerant fluid extracts heat from the water in the water circuit 10. The cooled water is transported to the various users 21, through which it extracts heat from the air in the passenger compartment of the vehicle 1. From the users 21, the water returns to the water inlet 103b of the internal heat exchanger 103.

During heat production (heating phase of figure 2), when, based on measurements of the temperature sensor 108 associated with the external heat exchanger 101, it is determined that the temperature of the refrigerant fluid is below a threshold indicative of the presence of ice on the external heat exchanger 101, the control unit 30 of the heat pump starts a defrosting cycle. For example, it may be provided that after about 50 minutes of operation in the heating phase, a 10-minute defrosting cycle is needed. In this cycle, the hot refrigerant fluid is sent to the external heat exchanger for thawing.

Figure 4 shows the heat pump in Figure 1 in this defrosting phase. The arrows shown in the figure show the path of the refrigerant fluid in the refrigerant fluid circuit 10 and the path of the water in the water circuit. The low-pressure part of the refrigerant fluid circuit 10 is represented with dashed and dotted lines; the high-pressure part of the refrigerant fluid circuit is represented with continuous lines.

In the defrosting phase illustrated in figure 4, the first two-way valve 111, the third two-way valve 113, the fourth two-way valve 114, the sixth two-way valve 116 and the seventh two-way valve 117 of the refrigerant circuit 10 are closed. Starting with the compressor 104, the refrigerant fluid passes to the second two-way valve 112, to the external heat exchanger 101, to the first orifice 105, to the third orifice 107, and to the fifth two-way valve 115, finally returning to the compressor 104.

In addition to switching the heat pump from the heating phase to the defrosting phase, the control unit 30 of the heat pump closes the two-way inlet valve 202 and the two-way outlet valve 203 of the internal heat exchanger 103 and opens the two-way bypass valve 206 of the bypass line 205, while the pump 201 of the water circuit remains in operation. This operation allows hot water to circulate inside the passenger compartment of the vehicle and to be supplied to the users 21. Activating the bypass prevents the thermal energy stored by the water in the previous heating phase from being dissipated in the internal heat exchanger 103. It is thus possible to use this thermal energy to allow a partial production of hot air, even with the heat pump in the defrosting phase.

## Claims

1. An air-to-water heat pump for a vehicle, comprising a refrigerant fluid circuit (10) for circulation of a refrigerant fluid and a water circuit (20) for circulation of water for air conditioning within the vehicle (1),
wherein the refrigerant fluid circuit (10) comprises an external heat exchanger (101) for heat exchange between the refrigerant fluid and external ambient air, and an internal heat exchanger (103) for heat exchange between the refrigerant fluid and water of the water circuit (20),
a refrigerant fluid temperature sensor (108) configured to measure a temperature of the refrigerant fluid coming out from the external heat exchanger (101),
a control unit (30, 40) configured to switch in a programmed way the heat pump from a heating phase for heating an internal environment of the vehicle to a defrost phase for defrosting the external heat exchanger (101) when the measured temperature of the refrigerant fluid is below a predetermined threshold, indicative of a presence of ice on the external heat exchanger (101), wherein the water circuit (20) comprises a bypass line (205) interconnecting a water inlet (103a) and a water outlet (103b) of the internal heat exchanger (103), and valve means (202, 203, 206) controllable by the control unit (30, 40) to switch the water circuit (20),
**characterised in that**,
the heat pump is switched from the heating phase to the defrost phase, from a normal configuration in which a water path of the internal heat exchanger (103) is open and the bypass line (205) is closed, to a bypass configuration wherein the water path of the internal heat exchanger (103) is closed and the bypass line (205) is open.

2. A heat pump according to claim 1, wherein the water circuit (20) comprises a plurality of air-conditioning users (21), each air-conditioning user (21) comprising a blower and a water/air heat exchanger for heat exchange between water of the water circuit and air within the vehicle.

## Patentansprüche

1. Luft-Wasser-Wärmepumpe für ein Fahrzeug, umfassend einen Kältemittelfluidkreislauf (10) zur Zirkulation eines Kältemittelfluids und einen Wasserkreislauf (20) zur Zirkulation von Wasser zur Klimatisierung innerhalb des Fahrzeugs (1);
wobei der Kältemittelfluidkreislauf (10) einen externen Wärmetauscher (101) zum Wärmeaustausch zwischen dem Kältemittelfluid und der externen Umgebungsluft sowie einen internen Wärmetauscher (103) zum Wärmeaustausch zwischen dem Kältemittelfluid und Wasser des Wasserkreislaufs (20) umfasst,
einen Kältemittelfluidtemperatursensor (108), der dazu konfiguriert ist, eine Temperatur des Kältemittelfluids, das aus dem externen Wärmetauscher (101) austritt, zu messen;
eine Steuereinheit (30, 40), die dazu konfiguriert ist, die Wärmepumpe auf programmierte Weise von einer Heizphase zum Heizen einer inneren Umgebung des Fahrzeugs auf eine Abtauphase zum Abtauen des externen Wärmetauschers (101) umzuschalten, wenn die gemessene Temperatur des Kältemittelfluids unter einem vorbestimmten Schwellenwert liegt, der auf das Vorhandensein von Eis auf dem externen Wärmetauscher (101) hinweist,
wobei der Wasserkreislauf (20) eine Bypassleitung (205) umfasst, die einen Wassereinlass (103a) und einen Wasserauslass (103b) des internen Wärmetauschers (103) miteinander verbindet, und Ventilmittel (202, 203, 206) umfasst, die durch die Steuereinheit (30, 40) zum Umschalten des Wasserkreislaufs (20) gesteuert werden können,
**dadurch gekennzeichnet, dass** die Wärmepumpe von der Heizphase in die Abtauphase umgeschaltet wird, von einer normalen Konfiguration, in der ein Wasserweg des internen Wärmetauschers (103) offen ist und die Bypassleitung (205) geschlossen ist, zu einer Bypasskonfiguration, in der der Wasserweg des internen Wärmetauschers (103) geschlossen ist und die Bypassleitung (205) offen ist.

2. Wärmepumpe nach Anspruch 1, wobei der Wasserkreislauf (20) eine Vielzahl von Klimaanlagenbenutzern (21) umfasst, wobei jeder Klimaanlagenbenutzer (21) ein Gebläse und einen Wasser/Luft-Wärmetauscher zum Wärmeaustausch zwischen Wasser des Wasserkreislaufs und der Luft im Fahrzeug umfasst.

## Revendications

1. Pompe à chaleur air-eau pour un véhicule, comprenant un circuit de fluide frigorigène (10) pour la circulation d'un fluide frigorigène et un circuit d'eau (20) pour la circulation d'eau pour climatisation à l'intérieur du véhicule (1),
dans laquelle le circuit de fluide frigorigène (10) comprend un échangeur de chaleur externe (101) pour un échange de chaleur entre le fluide frigorigène et l'air ambiant externe, et un échangeur de chaleur interne (103) pour un échange de chaleur entre le fluide frigorigène et l'eau du circuit d'eau (20),
un capteur de température de fluide frigorigène (108) configuré pour mesurer une température du fluide frigorigène sortant de l'échangeur de chaleur externe (101),
une unité de commande (30, 40) configurée pour commuter, d'une manière programmée, la pompe à chaleur d'une phase de chauffage pour chauffer un environnement interne du véhicule à une phase de dégivrage pour dégivrer l'échangeur de chaleur externe (101) lorsque la température mesurée du fluide frigorigène est au-dessous d'un seuil prédéterminé, indicatif d'une présence de glace sur l'échangeur de chaleur externe (101),
dans laquelle le circuit d'eau (20) comprend une conduite de dérivation (205) reliant une entrée d'eau (103a) et une sortie d'eau (103b) de l'échangeur de chaleur interne (103), et des moyens de vanne (202, 203, 206) aptes à être commandés par l'unité de commande (30, 40) pour commuter le circuit d'eau (20),
**caractérisée en ce que**,
la pompe à chaleur est commutée de la phase de chauffage à la phase de dégivrage, d'une configuration normale dans laquelle un passage d'eau de l'échangeur de chaleur interne (103) est ouvert et la conduite de dérivation (205) est fermée, à une configuration de dérivation dans laquelle le passage d'eau de l'échangeur de chaleur interne (103) est fermé et la conduite de dérivation (205) est ouverte.

2. Pompe à chaleur selon la revendication 1, dans laquelle le circuit d'eau (20) comprend une pluralité d'éléments d'utilisation de climatisation (21), chaque élément d'utilisation de climatisation (21) comprenant une soufflante et un échangeur de chaleur eau/air pour un échange de chaleur entre l'eau du circuit d'eau et l'air à l'intérieur du véhicule.
